# EUROPÄISCHE PATENTSCHRIFT

(11) **EP 2 789 222 B1**
(45) Veröffentlichungstag und Bekanntmachung des Hinweises auf die Patenterteilung: **06.01.2016**
(21) Anmeldenummer: 14154230.8
(22) Anmeldetag: 07.02.2014
(51) Int. Cl.: A01F 12/56, A01D 69/00

(54) **Als Riementriebe ausgebildetes Antriebssystem eines selbstfahrenden Mähdreschers**
Drive system in the form of a belt drive for a self-propelled combine harvester
Système d'entraînement configuré sous forme d'entraînement à courroie d'une moissonneuse-batteuse automotrice

(30) Priorität: 08.04.2013 DE 102013103450
(43) Veröffentlichungstag der Anmeldung: 15.10.2014
(73) Patentinhaber: CLAAS Selbstfahrende Erntemaschinen GmbH, 33428 Harsewinkel (DE)
(72) Erfinder: Furmaniak, Jan, 48145 Münster (DE)

(56) Entgegenhaltungen:
- EP-A1- 1 044 598
- EP-A1- 1 905 291
- EP-A2- 0 901 928
- EP-A2- 1 375 977

## Beschreibung

Die Erfindung betrifft gemäß dem Oberbegriff des Patentanspruchs 1 ein als Riementriebe ausgebildetes Antriebssystem eines selbstfahrenden Mähdreschers mit einer auf einer Maschinenseite des Mähdreschers von einer Brennkraftmaschine angetriebenen Hauptantriebsscheibe, von der aus über eine erste Vorgelegestufe eine Einrichtung zur Restkornabscheidung und ein Strohhäcksler angetrieben werden.

Bei der Getreide- oder Rapsernte mittels eines Mähdreschers wird das von einem als Schneidwerk ausgebildeten Erntevorsatz bodennah abgeschnittene Erntegut aufgenommen und über einen Schrägförderer in eine Dresch- und Trenneinrichtung gefördert. Die Dresch- und Trenneinrichtung ist üblicher Weise als Tangentialdreschwerk ausgebildet, wobei moderne Mähdrescher mit einem hohen Erntegutdurchsatz zur Verringerung von Körnerverlusten Mehrtrommelanordnungen aufweisen, d.h., das von dem Schrägförderer geförderte Erntegut wird zunächst einer Vorbeschleunigungstrommel und dann einer Dreschtrommel zugeführt. Die ausgedroschenen Körner bei Getreide oder die ausgedroschenen Früchte bei Raps gelangen über einen Vorbereitungsboden, über Siebe einer Reinigungsvorrichtung sowie einen Körnerelevator in einen Korntank.

Anschließend wird das ausgedroschene Halmgut über eine Strohwendetrommel einer Einrichtung zur Restkornabscheidung zugeführt. Diese kann als axiales Fördersystem oder als Anzahl von Hordenschüttlern ausgebildet sein. Die Hordenschüttler werden schwingend bewegt und weisen Fallstufen sowie Schüttlerrücklauftaschen auf, über die das aus dem Stroh abgeschiedene Restkorn gemeinsam mit Verunreinigungen auf einen geriffelten Rücklaufboden gelangt. Im Fall einer Ausbildung der Restkornabscheidung als axiales Fördersystem weist diese zumindest einen in axialer Richtung fördernden Rotor und ein diesen radial umschließendes Abscheidegehäuse auf, das in seinem unteren Bereich siebartig gestaltet ist. Dabei wird das aus dem vorgenannten Tangentialdreschwerk austretende Stroh über die Strohwendetrommel dem in Längsrichtung des Mähdreschers verlaufenden Abscheidegehäuse zugeführt. Der Rotor fördert das Stroh unter Abscheidung des Restkorns durch den Abscheidekorb, den es schließlich am Heck des Mähdreschers verlässt.

Wird mit dem Mähdrescher Getreide geerntet, so kann das aus der Einrichtung zur Restkornabscheidung austretende Stroh über einen am Heck des Mähdreschers vorgesehenen Strohhäcksler zerkleinert werden oder es wird ungehäckselt als Schwad auf den Stoppeln abgelegt, so dass dieses im Schwad abgelegte Stroh anschließend in einem weiteren Arbeitsgang von einer mit einer Pick-up versehenen Ballenpresse aufgenommen werden kann. Der Strohhäcksler, der aus einem Rotor mit einer Vielzahl von umlaufenden Messern und einem Korb mit feststehenden Gegenmessern besteht, ist zu diesem Zweck zu- und abschaltbar und kann aus einer Arbeitsposition heraus in eine Ruheposition verschwenkt werden, in der die zuvor erläuterte Schwadablage des Strohs erfolgen kann.

Das Schneidwerk kann auch gegen einen als Maispflücker ausgebildeten Erntevorsatz ausgetauscht werden, der Einzugselemente für die Maispflanzen sowie diesen nachgeordnete Pflückwalzen aufweist. In diesem Fall werden der Dresch- und Trenneinrichtung nur die Maiskolben sowie die Maislieschen zugeführt. Da die Maisstängel im Hinblick auf die anschließende Bodenbearbeitung zu zerkleinern sind, ist in der Regel am Erntevorsatz ein Häcksler vorgesehen, der die Maisstängel bodennah abschneidet und zerkleinert. Es ist aber auch möglich, einen Anbauhäcksler am Heck des Mähdreschers vorzusehen. Dieser muss aber im Gegensatz zu dem zuvor erwähnten Strohhäcksler derart ausgebildet sein, dass er die Maisstängel bodennah abtrennen kann.

Die rotativ angetriebenen Einrichtungen von Mähdreschern stehen üblicher Weise über Riementriebe mit einem Abtrieb einer Brennkraftmaschine in Verbindung, wobei es sich um Riementriebe mit Keilriemen oder Flachriemen handeln kann. Auf Grund der baulichen Abmessungen des Mähdreschers und der Einbaulage der Brennkraftmaschine oberhalb der Einrichtung zur Restkornabscheidung bzw. hinter einem Korntank können große Achsabstände und somit große Riemenlängen erforderlich sein. Wegen des begrenzten Bauraumes, der für die Anordnung der Riementriebe zur Verfügung steht und zur Verringerung des baulichen Aufwandes werden einige Bauelemente gemeinsam über einen Riementrieb angetrieben. Dabei werden zum Teil Vorgelegestufen vorgesehen, die als zur Aufnahme mehrerer Treibriemen gestaltete Riemenscheiben ausgebildet sind, welche miteinander verbunden und drehbar an einem Maschinengestell des Mähdreschers gelagert sind. Bei einer entsprechenden Vorgelegestufe ist eine dieser Riemenscheiben als Abtriebsrad ausgebildet, über das die Vorgelegestufe von einem Riemen eines vorgeordneten Riementriebs angetrieben wird, während zumindest eine weitere Riemenscheibe als Antriebsrad einen Riemen eines weiteren Riementriebes antreibt. Die drehfest miteinander verbundenen Riemenscheiben können dabei zur Schaffung von Übersetzungsstufen mit unterschiedlichen Durchmessern ausgebildet sein.

Einige der in einem derartigen Antriebssystem verwendeten Riementriebe können zur stufenlosen Drehzahlverstellung der entsprechenden anzutreibenden Einrichtung dienen und sind zu diesem Zweck als Riemenvariator ausgebildet. Es besteht auch die Möglichkeit, einige der Riementriebe schaltbar auszubilden oder ihnen schaltbare Übersetzungsstufen zuzuordnen. Darüber hinaus können ein Fahrantrieb und andere Antriebe des Mähdreschers, wie zum Beispiel der Haspel, als stufenlos verstellbares hydrostatisches Getriebe oder als leistungsverzweigtes Getriebe ausgebildet sein. Alle diese Aspekte sind in der vorliegenden Erfindung zu berücksichtigen.

Ferner gibt es auch Antriebssysteme, bei denen die Einrichtungen über sich in Längsrichtung der Mähdrescher erstreckende Gelenkwellen angetrieben werden, welche aber auf Grund des Einsatzes von Winkelstufen und Gelenkwellen einen schlechten Wirkungsgrad aufweisen. Weitere Nachteile dieses Antriebs über Gelenkwellen sind ein hoher Bauraumbedarf wegen raumfordernder Getriebekomponenten, ein verzweigter Antriebsaufbau und eine begrenzte Leistungsfähigkeit.

Ein als Riementriebe ausgebildetes Antriebssystem eines selbstfahrenden Mähdreschers der im Oberbegriff des Patentanspruchs 1 angegebenen Gattung ist aus der EP 1 905 291 A1 bekannt. Dabei geht aus dieser Druckschrift ein auf einer Maschinenseite des Mähdreschers vorgesehenes Antriebssystem hervor, welches aus drei Riemengetrieben besteht. Über ein erstes Riemengetriebe wird von einer Antriebsscheibe einer Brennkraftmaschine aus ein als Abtriebsscheibe bezeichnetes Element einer Vorgelegestufe angetrieben. Bestandteil dieser Vorgelegestufe ist eine gemeinsam mit der vorgenannten Abtriebsscheibe ausgebildete Antriebsscheibe, die ein zweites Riemengetriebe antreibt, in welchem eine weitere Vorgelegestufe und eine Abtriebsscheibe für einen Strohhäcksler angeordnet sind. Die letztgenannte dritte Vorgelegestufe treibt ein drittes Riemengetriebe an, in welchem eine Antriebsscheibe für einen Trennrotor einer Einrichtung zur Restkornabscheidung angeordnet ist.

Es ist Aufgabe der vorliegenden Erfindung, einen funktionssicheren Antrieb der Einrichtung zur Restkornabscheidung, des Strohhäckslers sowie von leistungsstarken Erntevorsätzen zu gewährleisten, wobei eine hohe Leistungsdichte auf begrenztem Bauraum und eine Effizienzsteigerung durch eine hohe Riemenauslastung erzielt werden sollen.

Diese Aufgabe wird ausgehend vom Oberbegriff des Patentanspruchs 1 in Verbindung mit dessen kennzeichnenden Merkmalen gelöst. Gemäß dem kennzeichnenden Teil des Patentanspruchs 1 sollen die Hauptantriebsscheibe, die erste Vorgelegestufe und eine zweite Vorgelegestufe Bestandteile eines ersten Hauptriementriebes sein, wobei die erste Vorgelegestufe über einen ersten Riementrieb unmittelbar die Einrichtung zur Restkornabscheidung und über einen zweiten Riementrieb den Strohhäcksler antreibt. Weiterhin soll die zweite Vorgelegestufe trieblich mit Antrieben eines Erntevorsatzes und einer Reinigungsvorrichtung verbunden sein. Der im ersten Hauptriementrieb verwendete Verbundriemen steht folglich mit zwei Vorgelegestufen trieblich in Verbindung, die die Antriebsleistung zum einen auf die Einrichtung zur Restkornabscheidung und den Strohhäcksler sowie zum anderen auf den Erntevorsatz übertragen. Aufgrund dieses Leistungsflusses kann der im ersten Hauptriementrieb verwendete Verbundriemen relativ schmal ausgebildet sein, da er die Antriebsleistung auf Riemeneingriffe von zwei getrennten Vorgelegestufen überträgt. Dabei ist auch der unterschiedliche Leistungsbedarf des Erntevorsatzes berücksichtigt, der aus dem zuvor beschriebenen Wechsel von einem Getreide-/Rapsschneidwerk zu einem Maispflücker und/oder aus einer Veränderung der Arbeitsbreite des Erntevorsatzes resultieren kann.

Weiterhin wird durch die erfindungsgemäße Ausbildung des ersten Hauptriementriebs ein geordneter Grundaufbau geschaffen, mit dem eine ausgewogene Leistungsverteilung erzielt und Riemenstufen eingespart werden können. Die erste und die zweite Vorgelegestufe sind dabei als Paket drehfest miteinander verbundener Riemenscheiben ausgebildet, welches drehbar am Maschinengestell des Mähdreschers gelagert ist. Eine der Riemenscheiben der Vorgelegestufe dient dabei als Abtriebsscheibe, während zumindest eine Antriebsscheibe vorgesehen ist, die im Fall der zweiten Vorgelegestufe den Antrieb des Erntevorsatzes bewirkt. Die erste Vorgelegestufe, die ebenfalls ein im ersten Hauptriementrieb angeordnetes Abtriebsrad aufweist, steht über je ein Antriebsrad mit dem ersten und dem zweiten Riementrieb in Verbindung. Damit ist auch ein Grundaufbau geschaffen, der die Basis für eine optimale Gestaltung der weiteren Riementriebe der einzelnen Einrichtungen des Mähdreschers bildet.

Im Gegensatz dazu erfolgt bei dem Antriebssystem nach der EP 1 905 291 A1 der gesamte Leistungsfluss von der Abtriebsriemenscheibe der Brennkraftmaschine auf die erste Vorgelegestufe, über welche eine Verteilung der Antriebsleistung auf die mit dem dritten zur Restkornabscheidung führenden Vorgelegestufe und auf den Antrieb des Strohhäckslers aufgeteilt wird. Daher muss der Treibriemen relativ breit ausgebildet sein, um das große Antriebsdrehmoment auf diese Vorgelegestufe zu übertragen. Im Übrigen ist in diesem Antriebssystem kein Antrieb des Erntevorsatzes vorgesehen.

Gemäß einer weiteren Ausgestaltung der Erfindung soll die Hauptriemenscheibe über einen zweiten Hauptriementrieb trieblich mit einer zur gegenüberliegenden Maschinenseite führenden Durchtriebswelle verbunden sein, über welche Riementriebe auf dieser, in Fahrtrichtung gesehen rechten Maschinenseite, angetrieben werden. Folglich ist die Hauptantriebsscheibe an ihrem Außenumfang mit zwei Mitnahmeprofilen versehen, von denen eines auf den ersten und eines auf den zweiten Hauptriementrieb wirkt. Der Vorteil dieser Anordnung liegt darin, dass ein unmittelbarer Antrieb der Durchtriebswelle von der Hauptriemenscheibe der Brennkraftmaschine aus erfolgt. Im Übrigen kann neben den beiden Vorgelegestufen im ersten Hauptriementrieb noch eine Abtriebsriemenscheibe für eine Verteilerpumpe vorgesehen sein, wobei diese Verteilerpumpe unter anderem Bestandteil eines hydrostatischen Antriebes ist, der als Fahrantrieb des Mähdreschers dient oder im Rahmen dieses Fahrantriebes den hydrostatischen Leistungsfluss innerhalb eines leistungsverzweigten Getriebes zur Verfügung stellt. Des Weiteren dient die Verteilerpumpe dem Antrieb von Arbeitshydraulikkomponenten, mit denen es durch Vorgelegestufen antriebsmäßig verbunden ist. So wird beispielsweise der Spreuverteiler von der Verteilerpumpe angetrieben.

Weiterhin soll die Einrichtung zur Restkornabscheidung als in Längsrichtung des Mähdreschers verlaufendes trommelartiges Förderorgan ausgebildet sein, welches zumindest abschnittsweise von einem hohlzylindrischen Abscheidegehäuse umschlossen ist. Entsprechende Einrichtungen zur Restkornabscheidung gehen beispielsweise aus der DE 100 62 429 A1, DE 10 2005 046 005 A1 und DE 103 23 788 A1 hervor. Das trommelartige Förderorgan wird dabei von der für den Antrieb der Einrichtung zur Restkornabscheidung vorgesehene Abtriebsrad über ein Winkelgetriebe angetrieben. Die nach dem Dreschvorgang im Halmgut verbliebenen Körner oder Früchte werden über den hohlzylindrischen Abscheidekorb abgeschieden und gelangen auf den Rücklaufboden des Mähdreschers. Anstelle dieser Ausbildung der Einrichtung zur Restkornabscheidung kann auch eine Variante vorgesehen sein, die schwingend bewegte Hordenschüttler aufweist. Auf Grund des Aufbaus des ersten Hauptriementriebs können innerhalb einer Serie eines Mähdreschertyps Varianten mit Einrichtungen zur Restkornabscheidung versehen werden, die wahlweise als trommelartiges Förderorgan oder als Hordenschüttler ausgebildet sind.

Außerdem können der erste Riementrieb und/oder der zweite Riementrieb als Variatorgetriebe ausgebildet sein. Daher lassen sich die Antriebsdrehzahlen der Einrichtung zur Restkornabscheidung und/oder des Strohhäckslers stufenlos verstellen, wobei die jeweilige Verstellung aufgrund des aus der Bestandsdichte resultierenden Erntegutflusses bestimmt wird. Natürlich kann anstelle der stufenlosen Verstellung auch eine Verstellung vorgesehen sein, mittels welcher die entsprechende Antriebsdrehzahl stufenweise verändert wird. Zu diesem Zweck kann Bestandteil der jeweiligen Antriebsanordnung beispielsweise ein kompakt bauendes Planetengetriebe oder eine Riemenwechselstufe sein.

Gemäß einer vorteilhaften Ausgestaltung der Erfindung soll von der zweiten Vorgelegestufe aus über einen dritten Riementrieb eine dritte Vorgelegestufe angetrieben werden, von der aus über einen vierten Riementrieb der Erntevorsatz angetrieben wird. Dabei kann weiterhin von der zweiten Vorgelegestufe über einen fünften Riementrieb eine mit einem Antrieb einer Reinigungsvorrichtung verbundene Riemenscheibe angetrieben werden. Diese mit der Reinigungsvorrichtung verbundene Abtriebsscheibe bildet dabei eine Baueinheit mit einer Antriebsscheibe, so dass diese Einheit als vierte Vorgelegestufe wirkt, von der aus über einen sechsten Riementrieb ein Antrieb einer Kornförderschnecke und/oder einer Förderschnecke für eine Überkehr und/oder eines Körnerelevators erfolgt. Daraus ergibt sich eine sehr kompakte Anordnung aus den unmittelbar benachbarten zweiten, dritten und vierten Vorgelegestufen, wobei, wie bereits dargelegt, die dritte Vorgelegestufe gleichzeitig das Abtriebsrad für den Antrieb der Reinigungsvorrichtung bildet. Da von der dritten Vorgelegestufe der vierte Riementrieb zur Abtriebsriemenscheibe für den Erntevorsatz geführt wird, ergibt sich insgesamt ein sehr geordneter, übersichtlicher Riemenverlauf, durch den gegenüber vorbekannten Lösungen die Anzahl der Bauteile erheblich reduziert wurde.

Schließlich soll vom abtriebsseitigen Ende der Durchtriebswelle ein Variatortrieb zum Antrieb einer Dresch- und Trenneinrichtung sowie ein siebter Riementrieb zum Antrieb eines Reinigungsgebläses führen. Dieser Teil des Antriebssystems befindet sich auf der, in Fahrtrichtung des Mähdreschers gesehen, linken Maschinenseite. Die Dresch- und Trenneinrichtung kann dabei als eine Tangentialdreschtrommel und eine sich daran anschließende Strohwendetrommel ausgebildet sein. Eine Drehrichtungsumkehr für die Strohwendetrommel kann dabei durch einen überkreuzt laufenden Treibriemen herbeigeführt werden. Die Dresch- und Trenneinrichtung kann auch als Mehrtrommelanordnung ausgebildet sein, beispielsweise mit einer zusätzlichen Vorbeschleunigungstrommel und einer zusätzliche Abscheidetrommel.

Die Erfindung ist nicht auf die angegebene Kombination der Merkmale des Patentanspruchs 1 und der von diesem abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung der Ausführungsbeispiele oder zumindest aus den Zeichnungen hervorgehen, miteinander zu kombinieren. Die Bezugnahme der Patentansprüche auf die Zeichnung durch entsprechende Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine Seitenansicht eines selbstfahrenden Mähdreschers mit einem Teillängsschnitt durch dessen Dresch- und Trenneinrichtung, Reinigungsvorrichtung sowie Einrichtung zur Restkornabscheidung mit einer schematischen Darstellung der jeweiligen Bauelemente,
- Figur 2: eine schematische Darstellung eines Teils eines Antriebssystems des Mähdreschers, wobei zur Verdeutlichung der erfindungsgemäßen Anordnung zunächst nur ein erster und ein zweiter Hauptriementrieb dargestellt sind,
- Figur 3: eine Darstellung des Antriebssystems nach Figur 2, wobei dieses um einen Antrieb einer dritten Vorgelegestufe ergänzt ist,
- Figur 4: ein Antriebssystem des Mähdreschers nach den Figuren 2 und 3, dessen von einer Durchtriebswelle angetriebenen, auf einer gegenüberliegenden Seite des Mähdreschers vorgesehenen Riementriebe dargestellt sind, und
- Figur 5: das aus den Figuren 2 und 3 hervorgehende Antriebssystem, das um einen Antrieb eines Erntevorsatzes, einer Reinigungsvorrichtung, einer Einrichtung zur Restkornabscheidung und eines Antriebs von Kornförderschnecken und Körnerelevatoren ergänzt ist.

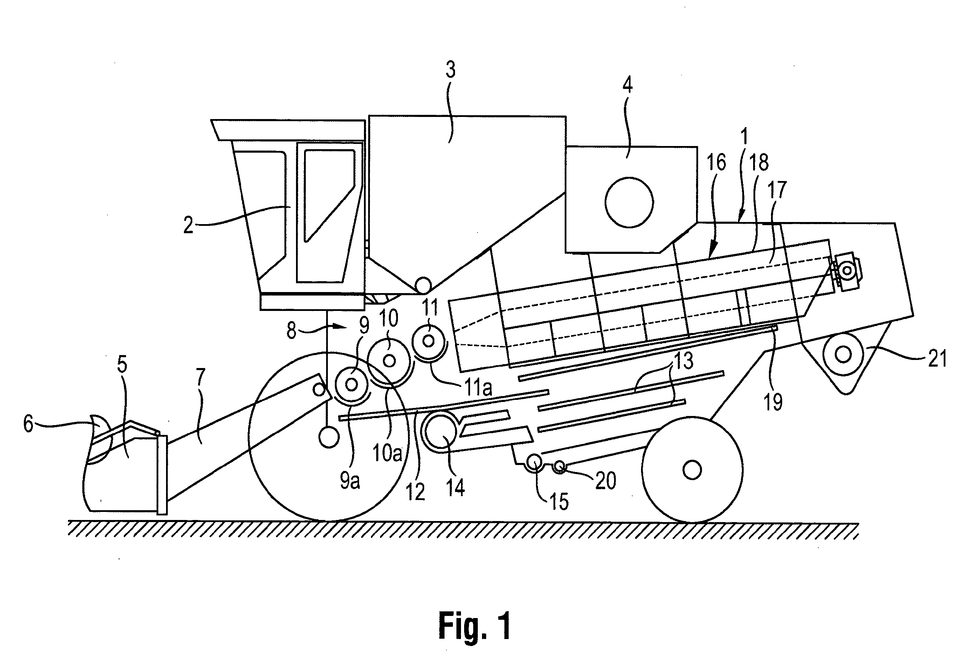

In der Figur 1 ist mit 1 ein selbstfahrender Mähdrescher bezeichnet, der eine Fahrerkabine 2, einen hinter dieser liegenden Korntank 3 sowie anschließend an diesen eine Brennkraftmaschine 4 aufweist. Weiterhin nimmt der selbstfahrende Mähdrescher 1 in seinem Frontbereich einen Erntevorsatz 5 auf, der nur teilweise dargestellt und als Getreide- beziehungsweise Rapsschneidwerk ausgebildet ist. Als Erntevorsatz 5 kann auch ein Maisvorsatz verwendet werden, der die Maisstängel erfasst und die mittels einer Pflückeinrichtung die Maiskolben von den Maisstängeln trennt.

Dieser Erntevorsatz 5 erfasst das zu erntende Halmgut mit einer Haspel 6 und schneidet es mittels eines nicht näher dargestellten Mähwerks bodennah ab, woraufhin das Erntegut aus dem Erntevorsatz 5 mittels eines Schrägförderers 7 einer Dresch- und Trenneinrichtung 8 zugeführt wird. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Abscheidetrommel 11. Diesen Trommeln 9, 10 und 11 sind jeweils Abscheidekörbe 9a, 10a und 11 a zugeordnet. Die geernteten Körner oder Früchte gelangen durch die Abscheidekörbe 9a, 10a und 11 a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus dem Mähdrescher 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert.

Sämtliche Anteile des Halmgutes, die die Abscheidekäfige 9a, 10a und 11a nicht in Richtung des Vorbereitungsbodens 12 passieren und bei denen es sich um Stroh, Kurzstroh, Ähren und gegebenenfalls Grannen handelt, werden mittels der Abscheidetrommel 11 oder, alternativ dazu, mittels einer Strohwendetrommel, einer Einrichtung 16 zur Restkornabscheidung zugeführt. Diese Einrichtung 16 zur Restkornabscheidung weist bei dem in der Figur 1 dargestellten Mähdrescher 1 ein in Längsrichtung des Mähdreschers verlaufendes trommelartiges Förderorgan 17 auf, das auch als Trennrotor bezeichnet wird und an seinem radialen Umfang schraubenlinienartig verlaufende Förderelemente hat, welche im Einzelnen nicht dargestellt sind.

Das trommelartige Förderorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die, wie z. B. nicht ausgedroschene Ähren, von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes zurück in die Dresch- und Trenneinrichtung 8. Das durch das Abscheidegehäuse 18 geförderte Stroh verlässt dieses an dessen hinterem Ende, wo das Stroh in einen Strohhäcksler 21 gelangt.

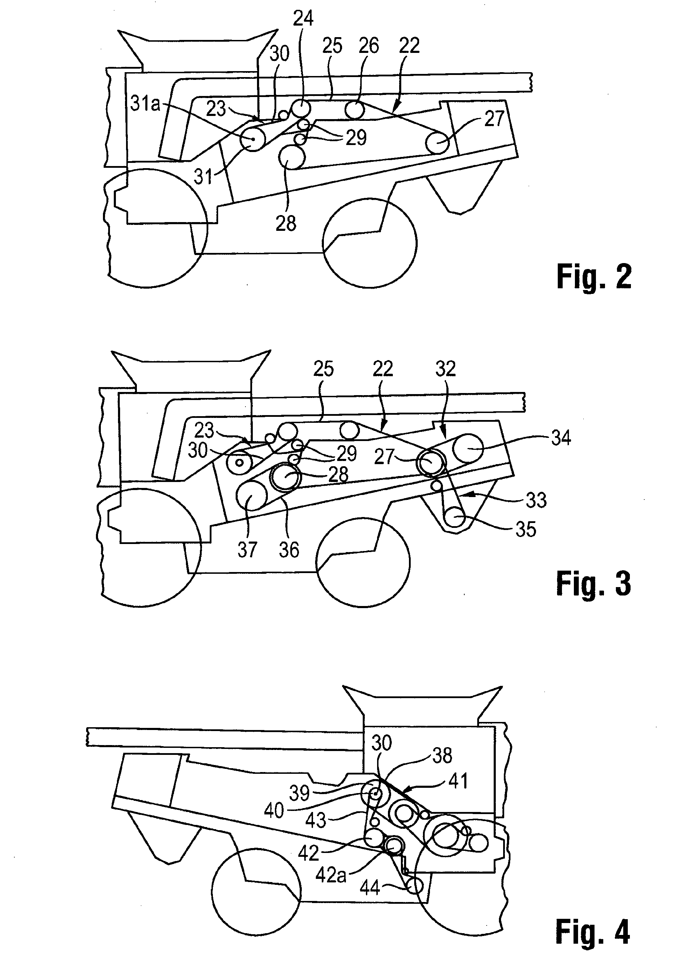

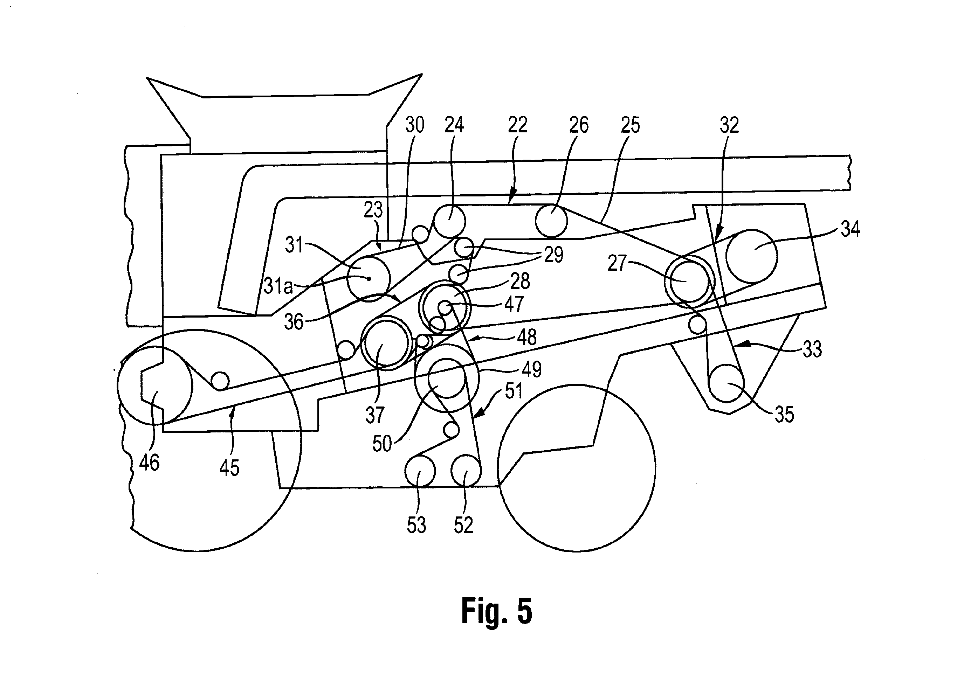

In der später noch im Einzelnen erläuterten Figur 5 ist die Ausbildung eines Antriebssystems für einen gemäß Figur 1 ausgebildeten Mähdrescher 1 dargestellt, wobei es sich um den Teil des Antriebssystems handelt, der sich auf der, in Fahrtrichtung des Mähdreschers 1 gesehen, linken Seite befindet. Weiterhin geht aus der Figur 4 der Teil der Antriebsvorrichtung des Mähdreschers 1 hervor, der sich auf der rechten Seite des Mähdreschers 1 befindet.

Zum besseren Verständnis der Riemenverläufe und der trieblichen Verbindung der Antriebsorgane des Antriebssystems ist die Darstellung nach der Figur 2 zunächst auf den Grundaufbau dieses Antriebes begrenzt, der aus einem ersten Hauptriementrieb 22 und einem zweiten Hauptriementrieb 23 besteht. Dabei werden sowohl der erste Hauptriementrieb 22 als auch der zweite Hauptriementrieb 23 von einer Hauptantriebsscheibe 24 angetrieben, die von der Brennkraftmaschine 4 in Rotation versetzt wird. Da die Hauptriemenscheibe 24 zwei unterschiedliche Riementriebe, nämlich den ersten Hauptriementrieb 22 und den zweiten Hauptriementrieb 23 antreibt, ist sie mit zwei unterschiedlichen Riemenantriebsprofilen versehen, die gleiche oder unterschiedliche Durchmesser aufweisen können.

Der erste Hauptriementrieb 22 weist einen ersten Verbundriemen 25 auf, der über eine Abtriebsscheibe 26 einer Verteilerpumpe, eine erste Vorgelegestufe 27 und eine zweite Vorgelegestufe 28 geführt ist. Außerdem wird der erste Verbundriemen 25 über ein Spannsystem 29 gespannt. Weiterhin führt ein zweiter Verbundriemen 30 von der Hauptriemenscheibe 24 zu einer auf einer Durchtriebswelle 31 a angeordneten Abtriebsriemenscheibe 31. Auf die Funktion dieser Durchtriebswelle 31 a wird noch im Zusammenhang mit der Figur 4 eingegangen werden.

Die Figur 2 verdeutlicht, dass der erste Verbundriemen 25 sowohl mit der ersten Vorgelegestufe 27, die, wie noch weiter erläutert werden wird, für den Antrieb der Einrichtung 16 zur Restkornabscheidung und des Strohhäckslers 21 vorgesehen ist, und mit der zweiten Vorgelegestufe 28 im Eingriff steht, die, was nachfolgend beschrieben werden wird, zum Antrieb des Erntevorsatzes 5 und der Reinigungsvorrichtung 13 dient. Da das gesamte Antriebsmoment nicht von der Hauptantriebsscheibe 24 über einen ersten Verbundriemen 25 auf ein einziges Riemenscheibenpaar sondern auf die beiden Vorgelegestufen 27 und 28 übertragen wird, kann der Verbundriemen 25 mit verhältnismäßig geringer Riemenbreite ausgebildet sein. Außerdem wird dadurch insgesamt ein relativ einfacher Grundaufbau des Antriebssystems geschaffen, das mit einer verhältnismäßig geringen Anzahl von Bauelementen auskommt.

Nach der Figur 3 ist dieser Grundaufbau des Antriebssystems zunächst zum besseren Verständnis nur um den zuvor angegebenen Antrieb für die Einrichtung 16 zur Restkornabscheidung, den Strohhäcksler 21, den Erntevorsatz 5 und die Reinigungsvorrichtung 13 erweitert. Zu diesem Zweck ist die am Maschinengestell des Mähdreschers 1 drehbar angeordnete erste Vorgelegestufe 27 neben einem Abschnitt für den Abtrieb des ersten Verbundriemens 25 mit Abschnitten für einen Antrieb eines ersten Riementriebs 32 der zur Einrichtung 16 zur Restkornabscheidung führt, und mit einem zweiten Riementrieb 33, der zum Strohhäcksler 21 führt, verbunden.

Der erste Riementrieb 32 weist dabei eine Abtriebsriemenscheibe 34 der Einrichtung 16 zur Restkornabscheidung auf, während Bestandteil des zweiten Riementriebes 33 eine mit dem Strohhäcksler 21 verbundene Abtriebsriemenscheibe 35 ist. Von der zweiten Vorgelegestufe 28 führt ein dritter Riementrieb 36 zu einer dritten Vorgelegestufe 37, die, genauso wie die erste und zweite Vorgelegestufe 27 beziehungsweise 28, als Verbund aus mehreren Riemenscheiben besteht, die drehfest miteinander verbunden sind, und drehbar am Maschinengestell des Mähdreschers 1 gelagert sind. Die Anordnung nach der Figur 3 wird noch im Zusammenhang mit der Figur 5 auf eine Gesamtanordnung des auf der linken Maschinenseite des Mähdreschers 1 vorgesehenen Antriebssystems komplettiert.

In der Figur 4 ist die, in Fahrtrichtung des Mähdreschers 1 gesehen, rechte Maschinenseite dargestellt. Danach treibt die im Zusammenhang mit den Figuren 2 und 3 bereits erläuterte Durchtriebswelle 30 eine Abtriebsriemenscheibe 38 an, die einstückig mit Antriebsriemenscheiben 39 und 40 ausgebildet ist. Die Antriebsriemenscheibe 39 ist dabei Bestandteil eines Variatortriebs 41, der die Abscheidetrommel 11, die Dreschtrommel 10 und die Vorbeschleunigungstrommel 9 antreibt. Von der Antriebsriemenscheibe 39 aus führt ein siebter Riementrieb 43 zu einer Riemenscheibe 42, die trieblich mit einer Riemenscheibe 42a verbunden ist. Letztere treibt eine Abtriebsriemenscheibe 44 an, die für das Reinigungsgebläse 14 vorgesehen ist.

In der Figur 5 sind die wesentlichen Bestandteile des auf der linken Maschinenseite des Mähdreschers 1 vorgesehenen Antriebssystems dargestellt. In Ergänzung zu der Anordnung nach der Figur 3 treibt die dritte Vorgelegestufe 37 über einen vierten Riementrieb 45 eine mit dem Erntevorsatz 5 verbundene Abtriebsriemenscheibe 46 an. Weiterhin geht von einem Abtrieb 47 der zweiten Vorgelegestufe 28 ein fünfter Riementrieb 48 aus, der mit einer mit der Reinigungsvorrichtung 13 verbundenen Abtriebsriemenscheibe 49 im Eingriff ist. Von dieser Abtriebsriemenscheibe 49 geht eine Antriebsriemenscheibe 50 aus, die über einen sechsten Riementrieb 51 mit Abtriebsriemenscheiben 52 und 53 für die Körnerschnecke 15 und für die Förderschnecke 20 verbunden ist.

Aus den Figuren 2 bis 5 geht ein Antriebssystem mit einer optimalen Gestaltung des ersten Hauptriementriebes 22 sowie des zweiten Hauptriementriebes 23 hervor, die die Grundlage für einen geordneten Aufbau und der Anordnung der weiteren Riementriebe bildet. Daraus ergeben sich als wesentliche Vorteile, dass der erste Hauptriementrieb 22, der als Abtriebselemente die erste Vorgelegestufe 27 und die zweite Vorgelegestufe 28 aufnimmt, mit einem schmal bauenden Verbundriemen 25 auskommt. Aufgrund dieses Grundaufbaus ergibt sich für die von den beiden Hauptriementrieben 22 und 23 ausgehenden weiteren Riementriebe ein systematischer und geordneter Aufbau, welcher den Vorteil aufweist, dass gegenüber bekannten Antriebssystemen in erheblichem Umfang Bauteile eingespart werden können.

**Bezugszeichenliste**

| | | | |
|---|---|---|---|
| 1 | Selbstfahrender Mähdrescher | 27 | erste Vorgelegestufe |
| 2 | Fahrerkabine | 28 | zweite Vorgelegestufe |
| 3 | Korntank | 29 | Spannsystem von 25 |
| 4 | Brennkraftmaschine | 30 | zweiter Verbundriemen |
| 5 | Erntevorsatz | 31 | Abtriebsriemenscheibe von 31 a Durchtriebswelle |
| 6 | Haspel | | |
| 7 | Schrägförderer | 31 a | erster Riementrieb für 16 |
| 8 | Dresch- und Trenneinrichtung | 32 | zweiter Riementrieb für 21 |
| 9 | Vorbeschleunigungstrommel | 33 | Abtriebsriemenscheibe von 16 |
| 9a | Abscheidekorb von 9 | 34 | Abtriebsriemenscheibe von 21 |
| 10 | Dreschtrommel | 35 | dritter Riementrieb |
| 10a | Abscheidekorb von 10 | 36 | dritte Vorgelegestufe |
| 11 | Abscheidetrommel | 37 | Abtriebsriemenscheibe von 30 |
| 11 a | Abscheidekorb von 11 | 38 | Antriebsriemenscheibe von 38 |
| 12 | Vorbereitungsboden | 39 | Antriebsriemenscheibe |
| 13 | Reinigungsvorrichtung | 40 | Variatortrieb |
| 14 | Reinigungsgebläse | 41 | Riemenscheibe |
| 15 | Körnerschnecke | 42 | Riemenscheibe |
| 16 | Einrichtung zur Restkornabcheidung | 42a | siebter Riementrieb |
| | | 43 | Abtriebsriemenscheibe von 14 |
| 17 | trommelartiges Förderorgan | 44 | vierter Riementrieb |
| 18 | Abscheidegehäuse | 45 | Abtriebsriemenscheibe von 5 |
| 19 | Rücklaufboden | 46 | Abtrieb von 48 |
| 20 | Förderschnecke | 47 | fünfter Riementrieb |
| 21 | Strohhäcksler | 48 | Abtriebsriemenscheibe für 13 |
| 22 | erster Hauptriementrieb | 49 | Abtriebsriemenscheibe für 15 |
| 23 | zweiter Hauptriementrieb | 50 | sechster Riementrieb |
| 24 | Hauptantriebsscheibe | 51 | Abtriebsriemenscheibe für 15 |
| 25 | erster Verbundriemen von 22 | 52 | Abtriebsriemenscheibe für 20 |
| 26 | Abtriebsriemenscheibe einer Verteilerpumpe | 53 | |

## Patentansprüche

1. Als Riementriebe ausgebildetes Antriebssystem eines selbstfahrenden Mähdreschers (1) mit einer auf einer Maschinenseite des Mähdreschers (1) von einer Brennkraftmaschine (4) angetriebenen Hauptantriebsscheibe (24), von der aus über eine erste Vorgelegestufe (27) eine Einrichtung zur Restkornabscheidung (16) und ein Strohhäcksler (21) angetrieben werden, **dadurch gekennzeichnet, dass** die Hauptantriebsscheibe (24), die erste Vorgelegestufe (27) und eine zweite Vorgelegestufe (28) Bestandteile eines ersten Hauptriementriebes (22) sind, wobei die erste Vorgelegestufe (27) über einen ersten Riementrieb (32) unmittelbar die Einrichtung zur Restkornabscheidung und über einen zweiten Riementrieb (33) den Strohhäcksler (21) antreibt, und dass die zweite Vorgelegestufe (28) trieblich mit Antrieben (46) eines Erntevorsatzes (5) und einer Reinigungsvorrichtung (13) verbunden ist.

2. Als Riementriebe ausgebildetes Antriebssystem nach Patentanspruch 1, **dadurch gekennzeichnet, dass** die Hauptriemenscheibe (24) über einen zweiten Hauptriementrieb (23) mit einer zur gegenüberliegenden Maschinenseite führenden Durchtriebswelle (31 a) verbunden ist, über die Riementriebe (38, 39, 40, 41, 42, 42a, 43, 44) auf dieser Maschinenseite angetrieben werden.

3. Als Riementriebe ausgebildetes Antriebssystem nach Patentanspruch 1, **dadurch gekennzeichnet, dass** die Einrichtung zur Restkornabscheidung (16) als in Längsrichtung des Mähdreschers (1) verlaufendes trommelartiges Förderorgan (17) ausgebildet ist, welches zumindest abschnittsweise von einem hohlzylindrischen Abscheidegehäuse (18) umschlossen ist.

4. Als Riementriebe ausgebildetes Antriebssystem nach Patentanspruch 1, **dadurch gekennzeichnet, dass** die Einrichtung zur Restkornabscheidung (16) als mehrere über Kurbeltriebe angetriebene Hordenschüttler ausgebildet ist.

5. Als Riementriebe ausgebildetes Antriebssystem nach Patentanspruch 1, **dadurch gekennzeichnet, dass** innerhalb des ersten Hauptriementriebes (22) eine Abtriebsscheibe (26) einer Verteilerpumpe eines hydrostatischen Antriebes angeordnet ist.

6. Als Riementriebe ausgebildetes Antriebssystem nach Patentanspruch 1, **dadurch gekennzeichnet, dass** der erste Riementrieb (32) und/oder der zweite Riementrieb (33) als Variatorgetriebe ausgebildet sind.

7. Als Riementriebe ausgebildetes Antriebssystem nach Patentanspruch 1, **dadurch gekennzeichnet, dass** die zweite Vorgelegestufe (28) über einen dritten Riementrieb (36) eine dritte Vorgelegestufe (37)antreibt, von der aus über einen vierten Riementrieb (45) der Erntevorsatz angetrieben wird.

8. Als Riementriebe ausgebildetes Antriebssystem nach Patentanspruch 1, **dadurch gekennzeichnet, dass** die zweite Vorgelegestufe (28) über einen fünften Riementrieb (48) eine mit einem Antrieb einer Reinigungsvorrichtung (13) verbundene Abtriebsscheibe (49) antreibt.

9. Als Riementriebe ausgebildetes Antriebssystem nach Patentanspruch 8, **dadurch gekennzeichnet, dass** die Abtriebsscheibe (49) drehfest mit einer Antriebsriemenscheibe (50) für einen sechsten Riementrieb (51) verbunden ist, der für einen Antrieb einer Körnerschnecke (15) und/oder einer Förderschnecke ((20) und/oder eines Körnerelevators und/oder einer Überkehr vorgesehen ist.

10. Als Riementriebe ausgebildetes Antriebssystem nach Patentanspruch 2, **dadurch gekennzeichnet, dass** vom abtriebsseitigen Ende der Durchtriebswelle (31 a) ein Variatortrieb zum Antrieb einer Dresch- und Trenneinrichtung (8) sowie ein siebter Riementrieb (43) zum Antrieb eines Reinigungsgebläses (14) führen.

## Claims

1. A drive system in the form of belt drives of a self-propelled combine harvester (1) comprising a main drive pulley (24) which is driven on a machine side of the combine harvester (1) by an internal combustion engine (4) and from which a device (16) for separating off residual grain and a straw chopper (21) are driven by way of a first intermediate gear stage (27), **characterised in that** the main drive pulley (24), the first intermediate gear stage (27) and a second intermediate gear stage (28) are component parts of a first main belt drive (22), wherein the first intermediate gear stage (27) drives the residual grain separation device directly by way of a first belt drive (32) and drives the straw chopper (21) by way of a second belt drive (23) and that the second intermediate gear stage (28) is drivingly connected to drives (46) of a front-mounted harvesting attachment (5) and a cleaning device (13).

2. A drive system in the form of belt drives according to claim 1 **characterised in that** the main belt pulley (24) is connected by way of a second main belt drive (23) to a through-drive shaft (31a) which leads to the opposite machine side and by way of which belt drives (38, 39, 40, 41, 42, 42a, 43, 44) on said machine side are driven.

3. A drive system in the form of belt drives according to claim 1 **characterised in that** the residual grain separation device (16) is in the form of a drum-like conveyor member (17) which extends in the longitudinal direction of the combine harvester (1) and which is at least portion-wise enclosed by a hollow-cylindrical separation housing (18).

4. A drive system in the form of belt drives according to claim 1 **characterised in that** the residual grain separation device (16) is in the form of a plurality of straw walkers driven by way of crank drives.

5. A drive system in the form of belt drives according to claim 1 **characterised in that** arranged within the first main belt drive (22) is a driven pulley (26) of a distributor pump of a hydrostatic drive.

6. A drive system in the form of belt drives according to claim 1 **characterised in that** the first belt drive (32) and/or the second belt drive (33) is in the form of a variator transmission.

7. A drive system in the form of belt drives according to claim 1 **characterised in that** the second intermediate gear stage (28) drives by way of a third belt drive (36) a third intermediate gear stage (37) from which the front-mounted harvesting attachment is driven by way of a fourth belt drive (45).

8. A drive system in the form of belt drives according to claim 1 **characterised in that** the second intermediate gear stage (28) drives by way of a fifth belt drive (48) a driven pulley (49) connected to a drive of a cleaning device (13).

9. A drive system in the form of belt drives according to claim 8 **characterised in that** the driven pulley (49) is non-rotatably connected to a drive belt pulley (50) for a sixth belt drive (51) which is provided for a drive of a grain screw (15) and/or a conveyor screw (20) and/or a grain elevator and/or a tailings means.

10. A drive system in the form of belt drives according to claim 2 **characterised in that** a variator drive for driving a threshing and separating device (8) and a seventh belt drive (43) for driving a cleaning fan (14) lead from the driven end of the through-drive shaft (31a).

## Revendications

1. Système d'entraînement d'une moissonneuse-batteuse automotrice (1) conformé en entraînements à courroie, comprenant une poulie d'entraînement principale (24) qui est entraînée sur un côté machine de la moissonneuse-batteuse (1) par un moteur à combustion interne (4) et à partir de laquelle un dispositif de séparation résiduelle des grains (16) et un hache-paille (21) sont entraînés par l'intermédiaire d'un premier étage de renvoi (27), **caractérisé en ce que** la poulie d'entraînement principale (24), le premier étage de renvoi (27) et un deuxième étage de renvoi (28) font partie d'un premier entraînement principal à courroie (22), le premier étage de renvoi (27) entraînant directement le dispositif de séparation résiduelle des grains par l'intermédiaire d'un premier entraînement à courroie (32) et le hache-paille (21) par l'intermédiaire d'un deuxième entraînement à courroie (33), et **en ce que** le deuxième étage de renvoi (28) est relié de manière motrice à des entraînements (46) d'un outil frontal (5) et d'un dispositif de nettoyage (13).

2. Système d'entraînement conformé en entraînements à courroie selon la revendication 1, **caractérisé en ce que** la poulie principale (24) est reliée par l'intermédiaire d'un deuxième entraînement principal à courroie (23) à un arbre passant (31a) qui débouche du côté machine opposé et par l'intermédiaire duquel les entraînements à courroie (38, 39, 40, 41, 42, 42a, 43, 44) sont entraînés de ce côté-là de la machine.

3. Système d'entraînement conformé en entraînements à courroie selon la revendication 1, **caractérisé en ce que** le dispositif de séparation résiduelle des grains (16) est conformé en organe d'amenée en forme de tambour (17) qui s'étend dans la direction longitudinale de la moissonneuse-batteuse (1) et qui, au moins par endroits, est entouré par un carter de séparation cylindrique creux (18).

4. Système d'entraînement conformé en entraînements à courroie selon la revendication 1, **caractérisé en ce que** le dispositif de séparation résiduelle des grains (16) est conçu sous la forme de plusieurs secoueurs à éléments multiples entraînés par l'intermédiaire d'entraînements à manivelle.

5. Système d'entraînement conformé en entraînements à courroie selon la revendication 1, **caractérisé en ce qu'**à l'intérieur du premier entraînement principal à courroie (22) est disposée une poulie menée (26) d'une pompe de répartition d'un entraînement hydrostatique.

6. Système d'entraînement conformé en entraînements à courroie selon la revendication 1, **caractérisé en ce que** le premier entraînement par courroie (32) et/ou le deuxième entraînement à courroie (33) sont conformés en variateurs.

7. Système d'entraînement conformé en entraînements à courroie selon la revendication 1, **caractérisé en ce que** le deuxième étage de renvoi (28) entraîne, par l'intermédiaire d'un troisième entraînement à courroie (36), un troisième étage de renvoi (37) à partir duquel l'outil frontal est entraîné par l'intermédiaire d'un quatrième entraînement à courroie (45).

8. Système d'entraînement conformé en entraînements à courroie selon la revendication 1, **caractérisé en ce que** le deuxième étage de renvoi (28) entraîne, par l'intermédiaire d'un cinquième entraînement à courroie (48), une poulie menée (49) reliée à un entraînement d'un dispositif de nettoyage (13).

9. Système d'entraînement conformé en entraînements à courroie selon la revendication 8, **caractérisé en ce que** la poulie menée (49) est solidarisée en rotation à une poulie menante (50) d'un sixième entraînement à courroie (51) prévu pour entraîner une vis à grains (15) et/ou une vis de convoyage (20) et/ou un élévateur de grains et/ou des ôtons.

10. Système d'entraînement conformé en entraînements à courroie selon la revendication 2, **caractérisé en ce qu'**à partir de l'extrémité menée de l'arbre passant (31a), un variateur conduit à l'entraînement d'un dispositif de battage et de séparation (8) et un septième entraînement à courroie (43) conduit à l'entraînement d'un ventilateur de nettoyage (14).
